# EUROPÄISCHE PATENTSCHRIFT

(11) **EP 1 421 460 B1**
(45) Veröffentlichungstag und Bekanntmachung des Hinweises auf die Patenterteilung: **17.02.2016**
(21) Anmeldenummer: 02764624.9
(22) Anmeldetag: 04.07.2002
(51) Int. Cl.: G06F 21/33

(54) **VERFAHREN ZUR BEREITSTELLUNG VON SOFTWARE ZUR VERWENDUNG DURCH EIN STEUERGERÄT EINES FAHRZEUGS**
METHOD FOR PROVIDING SOFTWARE TO BE USED BY A CONTROL UNIT OF A VEHICLE
PROCEDE POUR LA MISE A DISPOSITION D'UN LOGICIEL DESTINE A ETRE UTILISE PAR UN APPAREIL DE COMMANDE D'UN VEHICULE

(30) Priorität: 27.08.2001 DE 10140721
(43) Veröffentlichungstag der Anmeldung: 26.05.2004
(73) Patentinhaber: Bayerische Motoren Werke Aktiengesellschaft, 80809 München (DE)
(72) Erfinder: KUHLS, Burkhard, 86391 Stadtbergen (DE)
(86) Internationale Anmeldenummer: PCT/EP2002/007398
(87) Internationale Veröffentlichungsnummer: WO 2003/019337

(56) Entgegenhaltungen:
- EP-A- 0 939 012
- EP-A- 1 127 756
- WO-A-00/16229
- WO-A-00/72149
- WO-A-01/13574
- US-A- 5 844 986
- MENEZES ET AL: "HANDBOOK OF APPLIED CRYPTOGRAPHY" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, Seiten 559-561, XP002148724 ISBN: 0-8493-8523-7
- ADAMS C ET AL: "Internet X.509 Public Key Infrastructure - Data Validation and Certification Server Protocols" INTERNET, Februar 2001 (2001-02), XP002235347 Gefunden im Internet: <URL:http://www.cs.utk.edu/~moore/RFC-PDF/ rfc3029.pdf> [gefunden am 2003-03-17]
- HOUSLEY R ET AL: "RFC - Request for Comments: 2459. Internet X.509 Public Key Infrastructure Certificate and CRL Profile" INTERNET, [Online] 1. Januar 1999 (1999-01-01), XP002247370 Gefunden im Internet: <URL:http://www.ietf.org/rfc/rfc2459.txt> [gefunden am 2003-07-11]

## Beschreibung

Die Erfindung betrifft insbesondere ein Verfahren zur Bereitstellung von Software zur Verwendung durch ein Steuergerät eines Fahrzeugs, wie insbesondere ein Kraftfahrzeug oder Motorrad, nach dem Oberbegriff des Anspruchs 1.

Steuergeräte für Kraftfahrzeuge weisen üblicherweise eine durch Software gesteuerte Ablaufsteuerung auf, die nach der Herstellung des Steuergeräts beim Hersteller des Steuergeräts oder beim Fahrzeughersteller nach der Montage des Steuergeräts in diesem gespeichert wird.

Nachteilig ist, dass die Software in schädigender Weise, ausgetauscht oder abgeändert werden kann.

Die Aufgabe der Erfindung besteht in der Verbesserung der Software/Hardware-Kombination, wie insbesondere eines Kraftfahrzeugs oder Personenkraftwagens.

Diese Aufgabe wird durch die in den unabhängigen Patentansprüchen angegebenen Maßnahmen jeweils gelöst. Vorteilhafte Ausgestaltungen der Erfindung sind in den abhängigen Patentansprüchen angegeben.

Ein wichtiger Aspekt der Erfindung besteht darin, unter Verwendung des Public-Key-Verfahrens, eine zur Verwendung durch ein Steuergerät eines Fahrzeugs vorgesehene Software, wie insbesondere ein Kraftfahrzeug oder Motorrad, unter Verwendung des geheimen bzw. privaten Schlüssels einer Software-Signaturstelle gegen Verfälschung zu signieren. Das Public-Key-Verfahren zeichnet sich insbesondere dadurch aus, dass es von einem besonderen Schlüssel-Paar Gebrauch macht, nämlich einem geheimen, privaten Schlüssel und einem zu diesem komplementären öffentlichen Schlüssel.

Alternativ oder ergänzend ist bei einer weiteren Ausführungsform der Erfindung vorgesehen, ein Software-Signatur-Zertifikat unter Verwendung des öffentlichen Schlüssels der Software-Signaturstelle und des geheimen Schlüssels einer Kontrollinstanz, eines sogenannten Trust-Centers, im Rahmen eines Public-Key-Verfahrens, zu erzeugen.

Alternativ oder ergänzend ist bei einer weiteren Ausführungsform der Erfindung vorgesehen, ein Kontrollinstanz-Zertifikat bzw. Trust-Center-Zertifikat unter Verwendung des geheimen Schlüssels der Kontrollinstanz zu erzeugen.

Alternativ oder ergänzend ist bei einer weiteren Ausführungsform der Erfindung vorgesehen, Freischaltcode-Daten unter Verwendung des geheimen Schlüssels einer Freischattcode-Stelle im Rahmen eines Public-Key-Verfahrens zu signieren.

Alternativ oder ergänzend ist bei einer weiteren Ausführungsform der Erfindung vorgesehen, ein Freischaltcodestelle-Signatur-Zertifikat unter Verwendung des geheimen Schlüssels der Kontrollinstanz, des Trust-Centers, im Rahmen eines Public-Key-Verfahrens, zu erzeugen.

Alternativ oder ergänzend ist bei einer weiteren Ausführungsform der Erfindung vorgesehen, das Trust-Center-Zertifikat in einer gegen Verfälschung und/oder Austausch geschützten Weise, wie in einem geschützten Speicher, Speicherbereich oder dgl., in dem Steuergerät zu speichern.

Alternativ oder ergänzend ist bei einer weiteren Ausführungsform der Erfindung vorgesehen, das Freischaltcodestelle-Signatur-Zertifikat, das Software-Signatur-Zertifikat, die Freischaltcode-Daten und deren Signatur sowie die Software und deren Signatur in dem Steuergerät zu speichern.

Alternativ oder ergänzend ist bei einer weiteren Ausführungsform der Erfindung vorgesehen, dass das Software-Signatur-Zertifikat eine oder mehrere Gültigkeitsbeschränkungen, wie insbesondere eine Beschränkung auf einen oder mehrere Steuergerätetypen, aufweist.

Alternativ oder ergänzend ist bei einer weiteren Ausführungsform der Erfindung vorgesehen, dass das Freischaltcodestelle-Signatur-Zertifikat eine oder mehrere Gültigkeitsbeschränkungen aufweist, wie insbesondere eine Beschränkung auf ein bestimmtes Steuergerät, das beispielsweise anhand einer in diesem unveränderlich gespeicherten Nummer, Kennung oder dgl. individualisiert ist, oder die Fahrgestellnummer eines Fahrzeugs.

Alternativ oder ergänzend ist bei einer weiteren Ausführungsform der Erfindung vorgesehen, dass das Software-Signatur-Zertifikat im Rahmen eines Public-Key-Verfahrens unter Verwendung des öffentlichen Schlüssels des Trust-Centers auf Unverfälschtheit überprüft wird.

Alternativ oder ergänzend ist bei einer weiteren Ausführungsform der Erfindung vorgesehen, dass die signierte Software im Rahmen eines Public-Key-Verfahrens unter Verwendung des im Software-Signatur-Zertifikat enthaltenen öffentlichen Schlüssels der Softwaresignatur-Stelle auf Unverfälschtheit überprüft wird.

Alternativ oder ergänzend ist bei einer weiteren Ausführungsform der Erfindung vorgesehen, dass das Freischaltcodestelle-Signatur-Zertifikat im Rahmen eines Public-Key-Verfahrens unter Verwendung des öffentlichen Schlüssels des Trust-Centers auf Unverfälschtheit überprüft wird.

Alternativ oder ergänzend ist bei einer weiteren Ausführungsform der Erfindung vor gesehen, dass die signierten Freischaltcode-Daten im Rahmen eines Public-Key-Verfahrens unter Verwendung des im Freischaltcodestelle-Signatur-Zertifikats enthaltenen öffentlichen Schlüssels der Freischaltcodestelle auf Unverfälschtheit überprüft werden.

Alternativ oder ergänzend ist bei einer weiteren Ausführungsform der Erfindung vorgesehen, dass das Steuergerät mit einem ablaufgesteuerten Mikroprozessor versehen ist, der eines der vorstehend beschriebenen Verfahren unter Verwendung des Public-Key-Verfahrens ausführt.

Die Erfindung wird nachfolgend anhand einer Zeichnung näher erläutert, wobei gleiche Bezugszeichen gleiche oder gleichwirkende Maßnahmen angeben. Es zeigt:

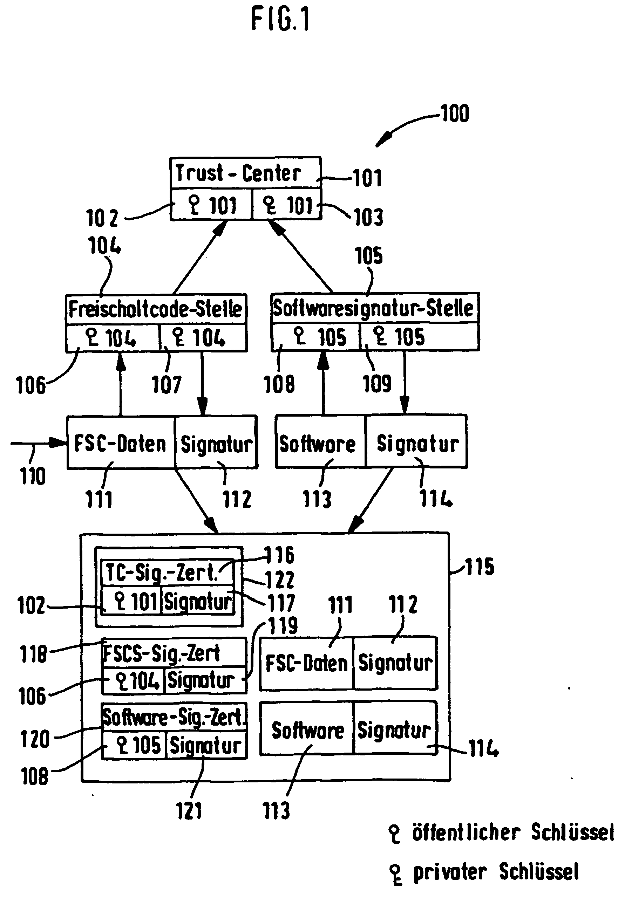

- Fig. 1: eine graphische Veranschaulichung eines erfindungsgemäßen Verfahrens zur Bereitstellung von Software zum Betrieb eines Steuergeräts in einem Fahrzeug, wie insbesondere ein Kraftfahrzeug oder Motorrad.

Bei dem in Figur 1 dargestellten Ablaufschema 100, das von dem bekannten Public-Key-Verfahren Gebrauch macht, wird ein Programm-Code zur Ablaufsteuerung eines Steuergeräts 115, d.h. eine Steuergerät-Software 113, an eine sogenannte Software-Signaturstelle 105 zum Zwecke seiner Signatur übermittelt. Bei dem Steuergerät 115 handelt es sich um eine programmgesteuerte Datenverarbeitungseinrichtung, die bevorzugt einen programmierbaren Speicher und einen Mikroprozessor aufweist. Anhand der Signatur kann erkannt werden, ob der Programm-Code nach der Signatur verändert bzw. manipuliert worden ist. Wie dies geschieht, wird im Folgenden näher erläutert.

Unter einem Steuergerät soll insbesondere sowohl ein herkömmliches Steuergerät in einem Fahrzeug zum Steuern und/oder Regeln von Aktuatoren als auch die sonstige programmgesteuerte Ausstattung eines Fahrzeugs verstanden werden, wie beispielsweise ein Kommunikations-System, ein Audio-System oder ein Navigations-System. Obwohl derzeit eine Vielzahl von Steuergeräten für unterschiedliche Funktionen bzw. Aktuatoren in Fahrzeugen vorgesehen sind, kann es sich bei einem erfindungsgemäßen Steuergerät auch um ein oder mehrere programmgesteuerte Datenverarbeitungseinrichtungen handeln, die die Steuer- und/oder Regelaufgaben von mehr als einem Steuergerät übernehmen.

Die Software-Signaturstelle 105 fordert bei einem sogenannten Trust-Center 101 des Fahrzeugherstellers, für dessen Fahrzeug das Steuergerät 115 bestimmt bzw. in dessen Fahrzeug es eingebaut ist oder werden soll, ein Software-Signatur-Zertifikat 120 an. Bei der Software-Signaturstelle 105 handelt es sich bevorzugt um den Hersteller der Software 113, wobei dies bevorzugt auch der Hersteller des Steuergeräts 115 ist.

Unter Verwendung seines nicht-öffentlichen, privaten Schlüssels 103 sowie des öffentlichen Schlüssels 108 der Software-Signaturstelle 103 erzeugt das Trust-Center 101 das Software-Signatur-Zertifkat 120. Dieses weist insbesondere den öffentlichen Schlüssel 108 der Software-Signaturstelle 105, bevorzugt ein oder mehrere Gültigkeitsbeschränkungen, die nicht explizit dargestellt sind, und eine von dem Trust-Center 101 erzeugte Signatur 121 auf. Die Signatur ermöglicht die Überprüfung, ob das Zertifikat nach seiner "Unterzeichnung" bzw. Signatur verändert oder manipuliert worden ist.

Bei einer von dem Steuergerät 115 auf ihre Erfülltheit hin überprüften Gültigkeitsbeschränkung im Software-Signatur-Zertifikat 120, kann es sich insbesondere um eine Beschränkung betreffend eine Betriebsstundenzahl, eine Lauf- bzw. Kilometer-Leistung, eine örtlich begrenzte Gültigkeit (in Bezug auf den Aufenthaltsort des Fahrzeugs), eine Zeitangabe oder Zeitdauer, ein oder mehrere Fahrzeugtypen, ein oder mehrere Steuergeräte oder Steuergerätetypen, eine Fahrgestellnummer oder eine Steuergerätenummer handeln. Bevorzugt weist das Software-Signatur-Zertifikat eine Beschränkung der Verwendbarkeit der Software auf ein oder mehrere Steuergerätetypen auf. Eine weitere Beschränkung kann darin bestehen, dass der Hersteller einer Software diese nur dann in ein Steuergerät einschreiben bzw. dort speichern oder zum Ablauf bringen kann, wenn der Hersteller der Software auch der Hersteller des Steuergeräts ist. Die Überprüfung der ein oder mehreren Gültigkeitsbeschränkungen erfolgt bevorzugt durch einen im Steuergerät 115 vorgesehenen, ablaufgesteuerten Mikroprozessor (nicht dargestellt), wobei dessen Ablaufsteuerung bzw. Software, entsprechend gestaltet ist.

Das Trust-Center 101 erzeugt ferner unter Verwendung seines geheimen Schlüssels 103 ein Trust-Center-Signatur-Zertifikat 116, das insbesondere dessen öffentlichen Schlüssel 101 und eine unter Verwendung des geheimen Schlüssels 103 des Trust-Centers 101 erzeugte Signatur 117 aufweist.

Die Software-Signaturstelle 105 erzeugt unter Verwendung ihres privaten bzw. geheimen Schlüssels 109 und der Software 113 eine Signatur 114, anhand der vom Steuergerät, wie insbesondere durch einen programmgesteuerten Mikroprozessor, überprüft werden kann, ob die Software 113 nach deren Signierung mit der Signatur 114 verändert worden ist.

Die Zertifikate 116 und 120 sowie die Software 113 und deren Signatur 114 werden in das Steuergerät 115 übertragen und dort gespeichert. Die Speicherung des Trust-Center-Signatur-Zertifikats 116 erfolgt in einem geschützten Speicher oder Speicherbereich 122, der verhindert, dass das Trust-Center-Signatur-Zertifikat 116 verändert und/oder ausgetauscht werden kann.

Wenn der Hersteller der Software und der Hersteller des Steuergeräts identisch sind, geschieht dies ganz oder teilweise bevorzugt durch den Hersteller vor der Auslieferung des Steuergeräts an den Fahrzeughersteller.

Zur Aktualisierung der im Steuergerät gespeicherten Software oder zur Bereitstellung von zusätzlicher oder alternativer Software im Steuergerät 115 können erfindungsgemäß mehrere Wege zum Einbringen der Software in das Fahrzeug verwendet werden. Dies kann beispielsweise bei einem Werkstattbesuch, z.B. über einen Diagnosestecker oder ein Kommunikations-Interface des Fahrzeugs, oder auch von einem an den Fahrzeugbesitzer ausgehändigten Datenträger, wie eine CD-ROM, DVD oder Chipkarte, erfolgen. Die Software wird dann ggf. über ein-im Kraftfahrzeug vorgesehenes Lesegerät für den betreffenden Datenträger eingespielt.

Bevor das Steuergerät 115 die an das Steuergerät 115 übertragene Software 113, ausführt, prüft das Steuergerät 115 in einem ersten Schritt auf der Basis des Public-Key-Verfahrens unter Verwendung des Software-Signatur-Zertifikats 120, das den öffentlichen Schlüssel 108 der Software-Signatur-Stelle 105 und die Signatur 121 des Trust-Centers 101 aufweist, und unter Verwendung des im geschützten Speicher oder Speicherbereich 122 gespeicherten öffentlichen Schlüssels 102 des Trust-Centers 101, ob das Software-Signatur-Zertifikat 120 verändert bzw. manipuliert worden ist.

Falls dies nicht der Fall ist, prüft das Steuergerät in einem zweiten Schritt auf der Basis des Public-Key-Verfahrens unter Verwendung des öffentlichen Schlüssels 108 der Software-Signatur-Stelle 105, der im ersten Schritt unter Verwendung des öffentlichen Schlüssels 102 des Trust-Centers 101 auf seine Unverändertheit hin überprüft worden ist, sowie unter Verwendung der Software 113 und der Signatur 114, ob die Software 113 verändert bzw. manipuliert worden ist.

Die positiv verlaufende Prüfung im ersten und zweiten Schritt, vorzugsweise von einem Prozessor (nicht dargestellt) des Steuergeräts, ist bei dem hier nachfolgend beschriebenen Ausführungsbeispiel eine erste notwendige jedoch nicht hinreichende Voraussetzung, damit die Software 113 von dem Steuergerät 115 ausgeführt werden kann.

Bevorzugt wird beispielsweise von dem Steuergerät 115 bzw. einem in diesem vorgesehenen ablaufgesteuerten Mikroprozessor (nicht dargestellt) zudem überprüft, ob eine oder mehrere bevorzugt im Software-Signatur-Zertifikat 120 von dem Trust-Center 101 hinterlegte Gültigkeitsbeschränkungen bzw. Gültigkeitsvoraussetzungen, wie insbesondere eine Betriebsstunden-Beschränkung der Verwendbarkeit des Zertifikats 120, erfüllt sind. Ggf. bildet die Erfülltheit der Gültigkeitsbeschränkungen bzw. Gültigkeitsvoraussetzungen eine weitere Voraussetzung, damit die Software 113 von dem Steuergerät 115 ausgeführt werden kann.

Bei einem anderen Ausführungsbeispiel, auf das nicht weiter eingegangen wird, handelt es sich hierbei um die alleinigen bzw. hinreichenden Voraussetzungen für die Ausführung der Software durch das Steuergerät.

Falls nicht bereits im Steuergerät 115 oder im Fahrzeug gespeichert, wird die signiere Software, die die Steuergerät-Software 113 und die Software-Signatur 114 aufweist, und das mit dem öffentlichen Schlüssel 108 versehene Software-Signatur-zertifikat 120, ggf. mit weiterer Software, dem Besitzer eines Fahrzeugs auf einem Datenträger (nicht dargestellt), wie eine CD-ROM oder DVD, zur Verfügung gestellt. Auf dessen Dateninhalt kann beispielsweise über eine entsprechende Datenverarbeitungseinrichtung (nicht dargestellt), die mit mindestens einem Steuergerät eines Kraftfahrzeugs in Verbindung steht, zugegriffen werden.

Im Folgenden wird angenommen, dass der Benutzer von der durch eine auf dem Datenträger verfügbaren Software bzw. von der dadurch gebotenen Zusatz-Funktionalität Gebrauch machen und die Software dementsprechend in ein oder mehrere Steuergeräte laden und dort ablaufen lassen möchte.

Bei dem hier behandelten, bevorzugten Ausführungsbeispiel sind zu den vorgenannten Schritten zusätzliche Schritte erforderlich bzw. Voraussetzungen zu erfüllen. Im hier geschilderten Ausführungsbeispiel nimmt der Besitzer des Fahrzeugs telefonisch oder per Internet aus dem Fahrzeug heraus Kontakt mit einer sogenannten Freischalt-Code-Stelle 104 auf. Nachdem die Zahlungsmodalitäten geklärt worden sind, wählt der Besitzer die betreffende freizuschaltende Software aus, übermittelt die Fahrgestellnummer und/oder eine das betreffende Steuergerät kennzeichnende Nummer oder dgl. (wobei dies auch elektronisch durch Auslesen und Übermittlung aus den betreffenden ein oder mehreren Steuergeräten geschehen kann) und gibt im Falle einer zeitabhängigen Nutzungsgebühr für die Software an, für welchen Zeitraum er die Nutzung der Software wünscht. Auf der Basis dieser Nutzungs-Angaben, die mit dem Bezugszeichen 110 bezeichnet sind, werden sogenannte Freischalt-Code-Daten 111 generiert.

Die Freischalt-Code-Stelle 104 fordert von dem Trust-Center 101 ein sogenanntes Freischaltcodestelle-Signatur-Zertifikat 118 an. Unter Verwendung des öffentlichen Schlüssels 106 der Freischalt-Code-Stelle 104 und dem geheimen Schlüssel 103 des Trust-Centers 101 erzeugt das Trust-Center 101 das Freischaltcodestelle-Signatur-Zertifikat 118 auf der Basis des Public-Key-Verfahrens.

Ferner kann vorgesehen sein, dass die Software 113, die Signatur 114 und/oder eine hieraus abgeleitete Information oder Softwarenummer oder dgl. bei der Freischalt-Code-Stelle 104 hinterlegt ist und/oder ganz oder teilweise in das Freischaltcodestelle-Signatur-Zertifikat 118 eingeht. Das Freischaltcodestelle-Signatur-Zertifikat 118 weist insbesondere den öffentlichen Schlüssel 106 der Freischalt-Code-Stelle 104 und die vom Trust-Center 101 erzeugte Signatur 119 auf, anhand der überprüft werden kann, ob das Zertifikat 118 nach seiner "Unterzeichnung" bzw. Signatur verändert oder manipuliert worden ist.

Bevorzugt weist das von dem Trust-Center 101 erzeugte Freischaltcodestelle-Signatur-Zertifikat 118 zudem ein oder mehrere Gültigkeitsbeschränkungen auf, die nicht explizit dargestellt sind.

Bei einer von dem Steuergerät 115 auf ihre Erfülltheit hin überprütten Gültigkeitsbeschränkung im Freischaltcodestelle-Signatur-Zertifikat 118, kann es sich insbesondere um eine Beschränkung betreffend eine Betriebsstundenzahl, eine Lauf- bzw. Kilometer-Leistung, eine örtlich begrenzte Gültigkeit (in Bezug auf den Aufenthaltsort des Fahrzeugs), eine Zeitangabe oder Zeitdauer, ein oder mehrere Fahrzeugtypen, ein oder mehrere Steuergeräte oder Steuergerätetypen oder eine Fahrgestellnummer oder eine Steuergerätenummer handeln. Bevorzugt weist das Freischaltcodestelle-Signatur-Zertifikat eine Beschränkung der Verwendbarkeit auf eine bestimmte, das Steuergerät individualisierende Steuergerätenummer oder eine Fahrgestellnummer auf. Die Überprüfung der ein oder mehreren Gültigkeitsbeschränkungen bzw. Gültigkeitsvoraussetzungen erfolgt bevorzugt durch einen im Steuergerät 115 vorgesehenen, ablaufgesteuerten Mikroprozessor (nicht dargestellt), wobei dessen Ablaufsteuerung bzw. Software, entsprechend gestaltet ist.

Ein bevorzugter Freischalt-Code weist die folgenden ganz oder teilweise von dem Steuergerät 115 überprüften und mit Referenzangaben verglichenen Informationsgruppen ganz oder teilweise auf: Software-Identifikation, Fahrgestellnummer und/oder Steuergerätenummer, Gültigkeitsbeschränkung, wie insbesondere eine absolute Zeitangabe, eine Betriebsstundenzahl, Identifikation des Nachfragers nach dem Freischaltcode, z.B. ein Fahrzeug-Händler oder ein Fahrzeugbesitzer, Identifikation der den Freischaltcode erzeugenden Freischaltcode-Stelle, Datum der Erzeugung und Signatur.

Beispielsweise kann die Beschränkung auch darin bestehen, dass die Freischalt-Code-Stelle Software und/oder Daten zur Verwendung durch ein im Fahrzeug vorgesehenes Navigationssystem, wie insbesondere Kartendaten oder dgl., nicht aber Software oder Daten zur Änderung der Motorsteuerung und/oder zur Ablaufsteuerung (besonders) sicherheitsrelevanter Steuergeräte freigeben kann.

Das von dem Trust-Center 101 erzeugte Freischaltcodestelle-Signatur-Zertifikat 118 und die Freischaltcode-Daten 111 sowie deren Signatur 112 werden in das Fahrzeug (nicht dargestellt) und nachfolgend in das betreffende Steuergerät 115 übertragen und dort gespeichert. Die Übertragung erfolgt bevorzugt drahtlos, wie insbesondere über ein Mobilfunknetz und/oder eine Internet-Verbindung.

Bevor das Steuergerät 115 die an das Steuergerät 115 übertragene Software 113 ausführt, prüft das Steuergerät 115 in einem dritten Schritt auf der Basis des Public-Key-Verfahrens unter Verwendung des Freischaltcodestelle-Signatur-Zertifikats 118, das den öffentlichen Schlüssel 106 der Freischaltcode-Stelle 104 und die Signatur 119 des Trust-Centers 101 aufweist, und unter Verwendung des im geschützten Speicher oder Speicherbereich 122 gespeicherten öffentlichen Schlüssels 102 des Trust-Centers 101, ob das Freischaltcodestelle-Signatur-Zertifikat 118 verändert bzw. manipuliert worden ist.

Falls dies nicht der Fall ist, prüft das Steuergerät 115 in einem vierten Schritt auf der Basis des Public-Key-Verfahrens unter Verwendung des öffentlichen Schlüssels 106 der Freischaltcodestelle-Stelle 104, der im dritten Schritt unter Verwendung des öffentlichen Schlüssels 102 des Trust-Centers 101 auf seine Unverändertheit hin überprüft worden ist, sowie unter Verwendung der Freischaltcode-Daten 111 und deren Signatur 112, ob die Freischaltcode-Daten 111 verändert bzw. manipuliert worden ist.

Bevorzugt wird beispielsweise von dem Steuergerät 115 bzw. einem in diesem vorgesehenen ablaufgesteuerten Mikroprozessor (nicht dargestellt) in einem fünften Schritt zudem überprüft, ob eine oder mehrere bevorzugt im Freischaltcodestelle-Signatur-Zertifikat 118 von dem Trust-Center 101 hinterlegte Gültigkeitsbeschränkungen bzw. Gültigkeitsvoraussetzungen erfüllt sind. Anderenfalls wird die Freigabe der Software oder deren Ablauf blockiert, wie insbesondere durch den Mikroprozessor.

Die positiv verlaufende Prüfung im dritten und vierten Schritt sowie ggf. die positive Prüfung im fünften Schritt, vorzugsweise von einem Prozessor (nicht dargestellt) des Steuergeräts, ist bei der beschriebenen, bevorzugten Ausführungsform der Erfindung die hinreichende Voraussetzung, damit die Software 113 von dem Steuergerät 115 ausgeführt werden kann.

## Patentansprüche

1. Verfahren zur Bereitstellung von Software zur Verwendung durch ein Steuergerät eines Fahrzeugs, wie insbesondere ein Kraftfahrzeug oder Motorrad, bei dem die Software vor ihrer Verwendung durch das Steuergerät unter Verwendung des geheimen bzw. privaten Schlüssels einer Software-Signaturstelle im Rahmen eines Public-Key-Verfahrens gegen Verfälschung signiert wird, und die signierte Software unter Verwendung des zu dem geheimen Schlüssel der Software-Signaturstelle komplementären öffentlichen Schlüssels auf ihre Unverfälschtheit hin überprüft wird, **dadurch gekennzeichnet, dass**
- ein Software-Signatur-Zertifikat unter Verwendung des öffentlichen Schlüssels der Software-Signaturstelle und des geheimen Schlüssels einer Kontrollinstanz, eines so genannten Trust-Centers, im Rahmen eines Public-Key-Verfahrens, erzeugt wird,
- ein Freischaltcodestelle-Signatur-Zertfikat unter Verwendung des geheimen Schlüssels der Kontrollinstanz, des Trust-Centers, im Rahmen eines Public-Key-Verfahrens, erzeugt wird,
- das Freischaltcodestelle-Signatur-Zertifikat, das Software-Signatur-Zertifikat, die Freischaltcode-Daten und deren Signatur sowie die Software und deren Signatur in dem Steuergerät gespeichert werden, und
- das Software-Signatur-Zertifikat mit einer oder mehreren Gültigkeitsbeschränkungen, wie insbesondere eine Beschränkung auf einen oder mehrere Steuergerätetypen, versehen worden ist.

2. Verfahren nach Anspruch 1, **dadurch gekennzeichnet, dass** ein Kontrollinstanz-Zertifikat bzw. Trust-Center-Zertifikat, im Rahmen eines Public-Key-Verfahrens, unter Verwendung des geheimen Schlüssels der Kontrollinstanz erzeugt wird.

3. Verfahren nach einem der Ansprüche 1 oder 2, **dadurch gekennzeichnet, dass** Freischaltcode-Daten unter Verwendung des geheimen Schlüssels einer Freischaltcode-Stelle, im Rahmen eines Public-Key-Verfahrens, signiert werden.

4. Verfahren nach Anspruch 2, **dadurch gekennzeichnet, dass** das Trust-Center-Zertifikat in einer gegen Verfälschung und/oder Austausch geschützten Weise, wie in einem geschützten Speicher, Speicherbereich oder dgl., gespeichert wird, wie insbesondere in dem Steuergerät.

5. Verfahren nach Anspruch 1, **dadurch gekennzeichnet, dass** das Freischaltcodestelle-Signatur-Zertifikat eine oder mehrere Gültigkeitsbeschränkungen aufweist, wie insbesondere eine Beschränkung auf ein bestimmtes Steuergerät, das beispielsweise anhand einer in diesem unveränderlich gespeicherten Nummer, Kennung oder dgl. individualisiert ist, oder eine Beschränkung auf die Fahrgestellnummer eines bestimmten Fahrzeugs.

6. Verfahren nach Anspruch 1, **dadurch gekennzeichnet, dass** das Software-Signatur-Zertifikat im Rahmen eines Public-Key-Verfahrens unter Verwendung des öffentlichen Schlüssels des Trust-Centers auf Unverfälschtheit überprüft wird.

7. Verfahren nach einem der Ansprüche 1 bis 6, **dadurch gekennzeichnet, dass** die signierte Software im Rahmen eines Public-Key-Verfahrens unter Verwendung des im Software-Signatur-Zertifikat enthaltenen öffentlichen Schlüssels der Softwaresignatur-Stelle auf Unverfälschtheit überprüft wird.

8. Verfahren nach Anspruch 1 oder 5, **dadurch gekennzeichnet, dass** das Freischaltcodestelle-Signatur-Zertifikat im Rahmen eines Public-Key-Verfahrens unter Verwendung des öffentlichen Schlüssels des Trust-Centers auf Unverfälschtheit überprüft wird.

9. Verfahren nach Anspruch 3, **dadurch gekennzeichnet, dass** die signierten Freischaltcode-Daten im Rahmen eines Public-Key-Verfahrens unter Verwendung des im Freischaltcodestelle-Signatur-Zertifikats enthaltenen öffentlichen Schlüssels der Freischaltcodestelle auf Unverfälschtheit überprüft werden.

10. Verfahren nach einem der Ansprüche 1 bis 9, **dadurch gekennzeichnet, dass** das Steuergerät mit einem ablaufgesteuerten Mikroprozessor versehen ist, der eines der vorstehend beschriebe nen Verfahren ausführt.

11. Steuergerät, ins besondere für ein Kraftfahrzeug oder Motorrad, **dadurch gekennzeichnet, dass** das Steuergerät ein Verfahren nach einem oder mehreren der vorstehenden Ansprüche ausführt.

12. Datenverarbeitungssystem, insbesondere für ein Kraftfahrzeug oder Motorrad, **dadurch gekennzeichnet, dass** das Datenverarbeitungssystem ein Verfahren nach einem oder mehreren der vorstehende n Ansprüche ausführt.

13. Computer-Programm-Produkt, insbesondere zur Ablaufsteuerung eines Steuergeräts oder eines D atenverarbeitungss ystems eines Kraftfahrzeugs oder Motorrads, **dadurch gekennzeichnet, dass** das Computer-Programm-Produkt ein Verfahren nach einem oder mehreren der vorstehen den Ansprüche ausführt.

14. Datenträger, **dadurch gekennzeichnet, dass** er ein Computer-Programm-Produkt nach Anspruch 13 aufweist.

## Claims

1. A method for providing software for use by a control unit of a vehicle, such as more especially a motor vehicle or motor bike, in which before the software is used by the control unit, it is signed against falsification using the secret or private key of a software signature site according to a public key method, and the signed software is checked for authenticity using the public key which is complementary to the secret key of the software signature site, **characterised in that**
- a software signature certificate is generated using the public key of the software signature site and the secret key of a supervisory authority, a so-called trust centre, according to a public key process,
- a clearing code site signature certificate is generated using the secret key of the supervisory authority, the trust centre, according to a public key method,
- the clearing code site signature certificate, the software signature certificate, the clearing code data and its signature as well as the software and its signature are stored in the control unit, and
- the software signature certificate has been provided with one or more validity restrictions, such as more especially a restriction to one or more types of control unit.

2. A method according to claim 1, **characterised in that** a supervisory authority certificate or a trust centre certificate is generated using the secret key of the supervisory authority according to a public key method.

3. A method according to either claim 1 or claim 2, **characterised in that** clearing code data are signed using the secret key of a clearing code site according to a public key method.

4. A method according to claim 2, **characterised in that** the trust centre certificate is stored in a manner protected against falsification and/or substitution, such as in a protected memory, in a memory area or the like, such as more especially in the control unit,

5. A method according to claim 1, **characterised in that** the clearing code site signature certificate has one or more validity restrictions, such as more especially a restriction to a specific control unit which is individualised for example by a number or identifier or the like stored unalterably therein, or a restriction to the chassis number of a particular vehicle.

6. A method according to claim 1, **characterised in that** the software signature certificate is checked for authenticity using the public key of the trust centre according to a public key method.

7. A method according to any one of claims 1 to 6, **characterised in that** the signed software is checked for authenticity using the public key, contained in the software signature certificate, of the software signature site according to a public key method.

8. A method according to claim 1 or claim 5, **characterised in that** the clearing code site signature certificate is checked for authenticity using the public key of the trust centre according to a public key method.

9. A method according to claim 3, **characterised in that** the signed clearing code data are checked for authenticity using the public key, contained in the clearing code site signature certificate, of the clearing code site according to a public key method.

10. A method according to any one of claims 1 to 9, **characterised in that** the control unit is provided with a sequentially-controlled microprocessor which implements one of the methods described above.

11. A control unit, more especially for a motor vehicle or motor bike, **characterised in that** the control unit implements a method according to one or more of the preceding claims.

12. A data processing system, more especially for a motor vehicle or a motor bike, **characterised in that** the data processing system implements a method according to one or more of the preceding claims.

13. A computer program product, more especially for sequentially controlling a control unit or a data processing system of a motor vehicle or motor bike, **characterised in that** the computer program product implements a method according to one or more of the preceding claims.

14. A data carrier, **characterised in that** it has a computer program product according to claim 13.

## Revendications

1. Procédé de mise à disposition de logiciels destinés à être utilisés par un appareil de commande d'un véhicule tel qu'en particulier un véhicule à moteur ou une motocyclette selon lequel avant son utilisation par l'appareil de commande le logiciel est signé pour empêcher les falsifications en utilisant la clef confidentielle ou privée d'un emplacement de signature de logiciels dans le cadre d'une procédure "public-key", et le logiciel signé est contrôlé pour vérifier l'impossibilité de sa falsification en utilisant la clef publique complémentaire à la clef confidentielle de l'emplacement de signature de logiciels,
**caractérisé en ce que**
- un certificat de signature de logiciel est obtenu en utilisant la clef publique de l'emplacement de signature de logiciels et la clef confidentielle d'une instance de contrôle d'un centre Trust dans le cadre d'une procédure "public-Key",
- un certificat de signature d'emplacement de code de déblocage est obtenu en utilisant la clef confidentielle de l'instance de contrôle du centre Trust dans le cadre d'une procédure "public-key",
- le certificat de signature d'emplacement de code de déblocage, le certificat de signature de logiciel, les données du code de déblocage et leur signature ainsi que le logiciel et sa signature sont mis en mémoire dans l'appareil de commande, et
- le certificat de signature de logiciel a été équipé d'une ou de plusieurs limitation(s) de validité telle(s) qu'en particulier une limitation à un ou à plusieurs type(s) d'appareil de commande.

2. Procédé conforme à la revendication 1,
**caractérisé en ce qu'**
un certificat d'instance de contrôle ou un certificat de centre Trust est produit dans le cadre d'une procédure "public-Key", en utilisant la clef confidentielle de l'instance de contrôle.

3. Procédé conforme à la revendication 1 ou 2,
**caractérisé en ce que**
des données de code de déblocage sont signées dans le cadre d'une procédure "public-Key" en utilisant la clef confidentielle d'un emplacement de code de déblocage.

4. Procédé conforme à la revendication 2,
**caractérisé en ce que**
le certificat de centre Trust est enregistré d'une manière protégée contre les falsifications et/ou les substitutions, notamment dans une mémoire une zone de mémoire ou similaire protégée, en particulier dans l'appareil de commande.

5. Procédé conforme à la revendication 1,
**caractérisé en ce que**
le certificat de signature de l'emplacement de code de déblocage comprend au moins une limitation de validité, telle qu'en particulier une limitation à un appareil de commande déterminé qui est par exemple individualisé à partir d'un numéro, d'un identifiant ou similaire enregistré de manière non modifiable dans celui-ci, ou une limitation au numéro de carrosserie d'un véhicule particulier.

6. Procédé conforme à la revendication 1,
**caractérisé en ce que**
le certificat de signature de logiciel est contrôlé quant à son caractère infalsifiable dans le cadre d'une procédure "public-Key" en utilisant la clef publique du centre Trust.

7. Procédé conforme à l'une des revendications 1 à 6,
**caractérisé en ce que**
le logiciel signé est vérifié quant à son caractère infalsifiable dans le cadre d'une procédure "public-Key" en utilisant la clef publique de l'emplacement de signature de logiciel contenue dans le certificat de signature de logiciel.

8. Procédé conforme à la revendication 1 ou 5,
**caractérisé en ce que**
le certificat de signature d'emplacement de code de déblocage est vérifié quant à sont caractère infalsifiable dans le cadre d'une procédure "public-Key" en utilisant la clef publique du centre Trust.

9. Procédé conforme à la revendication 3,
**caractérisé en ce que**
les données de code de déblocage signées sont vérifiées quant à leur caractère infalsifiable dans le cadre d'une procédure "public-Key" en utilisant la clef publique de l'emplacement de code de déblocage contenu dans le certificat de signature d'emplacement de code de déblocage.

10. Procédé conforme à l'une des revendications 1 à 9,
**caractérisé en ce que**
l'appareil de commande est équipé d'un microprocesseur à déroulement commandé qui exécute l'un des procédés décrit ci-dessus.

11. Appareil de commande, en particulier pour un véhicule automobile ou une motocyclette,
**caractérisé en ce que**
l'appareil de commande exécute un procédé conforme à l'une ou plusieurs des revendications précédentes.

12. Système de traitement de données en particulier pour un véhicule automobile ou une motocyclette,
**caractérisé en ce que**
le système de traitement de données exécute un procédé conforme à une ou à plusieurs des revendications précédentes.

13. Produit programme d'ordinateur en particulier pour la commande du déroulement d'un appareil de commande ou d'un système de traitement de données d'un véhicule automobile ou d'une motocyclette,
**caractérisé en ce que**
le produit-programme d'ordinateur exécute un procédé conforme à l'une ou à plusieurs des revendications précédentes.

14. Support de données **caractérisé en ce qu'**il comporte un produit-programme d'ordinateur conforme à la revendication 13.
